# FASCICULE DE BREVET EUROPEEN

(11) **EP 2 678 825 B1**
(45) Date de publication et mention de la délivrance du brevet: **15.07.2015**
(21) Numéro de dépôt: 12705144.9
(22) Date de dépôt: 22.02.2012
(51) Int. Cl.: G06T 7/00

(54) **PROCÉDÉ DE CALIBRAGE D'UN DISPOSITIF DE PRISE DE VUE STÉRÉOSCOPIQUE**
VERFAHREN ZUR KALIBRIERUNG EINER STEREOKOPISCHEN FOTOGRAFIEVORRICHTUNG
METHOD FOR CALIBRATING A STEREOSCOPIC PHOTOGRAPHY DEVICE

(30) Priorité: 24.02.2011 FR 1151499
(43) Date de publication de la demande: 01.01.2014
(73) Titulaire: NINTENDO EUROPEAN RESEARCH AND DEVELOPMENT, 75001 Paris (FR)
(72) Inventeur: DELATTRE, Alexandre, F-78220 Viroflay (FR); LARRIEU, Jérôme, F-64240 Hasparren (FR)
(74) Mandataire: Santarelli
(86) Numéro de dépôt international: PCT/EP2012/052973
(87) Numéro de publication internationale: WO 2012/113810

(56) Documents cités:
- JUYANG WENG ET AL: "CAMERA CALIBRATION WITH DISTORTION MODELS AND ACCURACY EVALUATION", IEEE TRANSACTIONS ON PATTERN ANALYSIS AND MACHINE INTELLIGENCE, IEEE SERVICE CENTER, LOS ALAMITOS, CA, US, vol. 14, no. 10, 1 octobre 1992 (1992-10-01), pages 965-980, XP000328810, ISSN: 0162-8828, DOI: 10.1109/34.159901

## Description

La présente invention concerne le domaine des dispositifs de prise de vue stéréoscopique et plus précisément leur calibrage.

Les dispositifs de prise de vue stéréoscopique tendent à se généraliser et peuvent aujourd'hui être commercialisés à un coût raisonnable. De ce fait, ces dispositifs font leur apparition dans nombre d'appareils grand public tels que des caméscopes, des appareils photographiques et l'on entrevoit leur incorporation dans des appareils tels que les téléphones mobiles ou les consoles de jeux portables. Autrefois réservés à du matériel professionnel, ils sont aujourd'hui réalisés à l'aide de composants à bas coût.

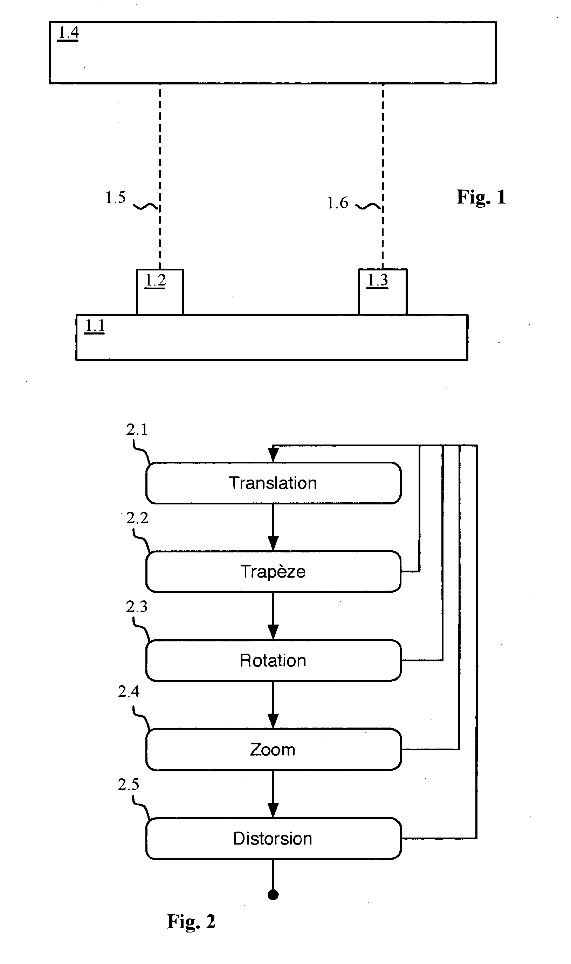

L'architecture générale de ces dispositifs est illustrée par la Fig 1. Ils sont constitués d'un support 1.1 intégré au produit qui porte deux caméras 1.2 et 1.3. Ces caméras sont typiquement espacées de quelques centimètres et doivent être idéalement strictement identiques. Elles doivent également avoir leurs axes optiques 1.5 et 1.6 idéalement parallèles. Lorsque ces conditions sont remplies, il est alors possible de prendre des images d'une scène 1.4 à l'aide du système. On obtient une image gauche prise par la caméra 1.2 et une image droite prise par la caméra 1.3. Les objets de la scène 1.4 situés suffisamment loin pour être considérés comme à l'infini sont alors parfaitement superposables dans les deux images. Les objets plus proches subissent une parallaxe se traduisant par un décalage horizontal en translation entre les deux images. Cette translation est d'autant plus importante que l'objet est proche des caméras en restant inférieur à la distance entre les caméras.

Dans ce domaine de produits grand public produits à grande échelle et pour un coût réduit, les exigences de qualité sont moindres que dans le domaine professionnel. De ce fait, les caméras utilisées ne sont pas strictement identiques et le positionnement des deux caméras subit également des tolérances assez larges.

De plus, l'aspect grand public des produits visés entraîne une grande variabilité au cours du temps de l'environnement des appareils qui peuvent être soumis à des chocs et à de grandes variations de température. Ces événements ont des conséquences sur les paramètres physiques des capteurs et leur positionnement.

Tous ces phénomènes ont pour conséquence qu'il est difficile d'obtenir une information stéréoscopique fiable des images gauche et droite prises par les caméras.

L'invention vise à résoudre les problèmes précédents en proposant un procédé de calibrage d'un dispositif de prise de vue stéréoscopique qui calcule un ensemble de paramètres de correction des images. Ces paramètres sont classés selon un ordre d'importance. Les paramètres de correction de premier ordre sont estimés dans un premier temps, les paramètres de correction de second ordre dans un second temps. Les paramètres de premier ordre sont affinés en tenant compte des valeurs d'estimation des paramètres de second ordre. Avantageusement, une mesure de la pertinence de la scène est effectuée préalablement au calibrage proprement dit.

Le document "Camera Calibration with Distortion Models and Accuracy Evaluation", Juyang Weng et al. IEEE Transactions on Pattern Analysis and Machine Intelligence, vol. 14, no. 10, 1992, pp. 965-980, divulgue une telle correction des paramètres classés en deux ordres : le premier ordre concerne les paramètres de rotation et translation, le second ordre concerne les paramètres de correction de la distortion. Ce document ne divulgue pas une hiérarchie en quatre ordres.

L'invention concerne un procédé de calibrage d'un dispositif de prise de vue stéréoscopique selon la revendication 1.

Selon un mode particulier de réalisation de l'invention, les défauts que l'on choisit de corriger sont choisis parmi : un décalage en translation global de l'image ; une déformation en trapèze horizontal et vertical ; une rotation ; un facteur de zoom et une distorsion en barillet ou en coussinet.

Selon un mode particulier de réalisation de l'invention, le défaut de premier ordre consiste en un décalage en translation global de l'image ; le défaut de second ordre consiste en une déformation en trapèze horizontal et vertical ; le défaut de troisième ordre consiste en une rotation et le défaut de quatrième ordre consiste en un facteur de zoom.

Selon un mode particulier de réalisation de l'invention, le procédé comporte en outre une étape de calcul d'un indice de la pertinence de la scène.

Selon un mode particulier de réalisation de l'invention, le calcul d'un indice de pertinence de la scène comprend : une étape de calcul des histogrammes des images droite et gauche ; une étape de calcul des parallaxes sur une pluralité de zones des images gauche et droite ; une étape de calcul d'un indice de détails de la scène en fonction de l'étalement des histogrammes et des indices de corrélation entre les zones des images droite et gauche ; une étape de calcul d'un indice de distance qui sera d'autant plus grand que les indices de parallaxes sont uniformément faibles et une étape de formation de l'indice de pertinence en fonction de l'indice de détail et de l'indice de distance.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale d'un dispositif de prise de vue stéréoscopique.
La Fig. 2 illustre l'organigramme du procédé de calibrage selon un mode de réalisation de l'invention.
La Fig. 3 illustre l'organigramme de l'étape de mesure de la pertinence de la scène selon un mode de réalisation de l'invention.
La Fig. 4 illustre le découpage de l'image utilisée dans un mode de réalisation de la mesure de pertinence.
La Fig. 5 illustre le procédé de calcul de corrélation rapide utilisé dans un mode de réalisation de la mesure de pertinence.

Un système de prise de vue stéréoscopique réel est sujet à un certain nombre d'imperfections physiques ayant des conséquences plus ou moins fortes sur les images capturées. Le placement physique des caméras sur le support n'est jamais parfaitement aligné ce qui induit que les axes optiques ne sont pas parfaitement parallèles. Pour pouvoir exploiter la stéréoscopie, il importe donc de corriger les effets dus à ces imperfections physiques.

L'invention est basée sur le fait que les différents effets à corriger n'ont pas tous le même impact sur la stéréoscopie. Certains sont plus importants que d'autres. On distingue ainsi plusieurs ordres dans les diverses distorsions constatées dans les images capturées par rapport aux images qui seraient obtenues par un système idéal. On parle de distorsions de premier ordre, de second ordre, de troisième ordre et de quatrième ordre.

On peut noter que, selon le processus de fabrication des caméras, l'ampleur et donc l'ordre de grandeur et donc de correction de chaque distorsion peut varier. On pourra donc avantageusement changer cet ordre de correction en fonction du besoin de correction du moment. Certaines distorsions n'apparaissant pas sur certaines caméras, on pourra avantageusement éviter de les corriger. D'autres distorsions « commutent » naturellement : l'estimation et la correction de la rotation et du zoom peuvent être réalisées de façon indépendante, donc dans un ordre indifférent.

Le procédé de calibrage consiste donc à estimer les paramètres de correction que l'on doit appliquer aux images capturées pour obtenir des images qui soient le plus proches que l'on puisse atteindre des images qui seraient obtenues par un système de prise de vue qui n'aurait aucun défaut.

Pour ce faire, on capture une scène qui doit avoir de bonnes propriétés. Tout d'abord, la scène doit être suffisamment éloignée pour que les images droite et gauche se superposent. On a vu que les points d'un objet au loin se superposent dans les deux images. Les défauts du système de prise de vue vont fausser cette superposition que l'on va chercher à retrouver. La scène doit aussi proposer un niveau de détails permettant la recherche d'une zone dans l'image. Une zone de couleur et de luminosité uniformes ne permettrait pas de mesurer les distorsions que l'on cherche à corriger. Elle doit aussi être exempte d'objets proches dont la parallaxe viendrait perturber les mesures.

Le défaut de premier ordre consiste en un décalage en translation global de l'image. Il est dû au fait que les axes optiques n'étant pas parfaitement parallèles, la portion de scène capturée par la caméra gauche 1.2 ne correspond pas exactement à la portion de scène capturée par la caméra droite 1.3. On cherche donc à déterminer un paramètre de translation horizontal ΔX et un paramètre de translation vertical ΔY permettant de recaler les deux images. Cette détermination consiste à calculer, lors d'une étape 2.1, le décalage pour lequel les images sont corrélées. Pour ce faire, l'exemple de réalisation calcule pour un ensemble de valeurs de translation un coefficient de corrélation entre l'image droite et l'image gauche. Par exemple, on calcule la somme des valeurs absolues des différences de luminosité en chaque point de l'image. Les valeurs de translation pour lesquelles cette somme est minimale nous donnent une première estimation des paramètres de premier ordre.

Le défaut de second ordre consiste en une déformation en trapèze, horizontal et vertical, due à la déformation de perspective induite par le non-parallélisme des axes optiques des deux caméras. Cette déformation se traduit par un rapport différent de un entre le bord gauche et le bord droit de l'image pour le trapèze horizontal et entre le bord haut et le bord bas pour le trapèze vertical. Ces paramètres sont estimés lors de l'étape 2.2 par calcul d'un coefficient de corrélation pour diverses valeurs de trapèze testées. Avantageusement, le trapèze étant dû à un effet de perspective résultant d'un défaut de parallélisme des axes optiques des caméras et ce défaut entraînant un décalage en translation associé, on associe les corrections de premier ordre de décalage en translation et les corrections de second ordre liées au trapèze pour l'estimation de ces paramètres. On applique alors à une image une translation et l'effet de trapèze associé lors des tests visant à l'estimation des valeurs de ces paramètres pour lesquels la corrélation est la plus forte entre les images.

Le troisième ordre est la prise en compte d'une possible rotation d'une caméra par rapport à l'autre autour de leur axe optique. Cette rotation entraîne une rotation d'une des deux images par rapport à l'autre autour du centre de l'image situé sur le trajet de l'axe optique de la caméra. Lors de l'étape 2.3, on estime ce facteur de rotation par calcul du coefficient de rotation pour différentes valeurs de ce facteur de rotation et l'on retient la valeur pour laquelle on obtient la plus forte corrélation.

Le quatrième ordre concerne une disparité d'angle de vue entre les deux caméras. Cette disparité entraîne un facteur de zoom entre les deux images. Lors de l'étape 2.4, la valeur de ce facteur de zoom est estimée par corrélation.

Avantageusement, un cinquième ordre peut être considéré. Il s'agit des effets dus aux distorsions optiques des lentilles des caméras. Selon le cas, chaque caméra peut induire une distorsion en barillet (*barrel distortion* en anglais) ou en coussinet (*pincushion distorsion* en anglais). Ces distorsions font apparaître l'image comme projetée sur une surface concave ou convexe. Lors de l'étape 2.5, ces distorsions sont estimées par corrélation.

Les distorsions peuvent par exemple être estimées et corrigées par une approximation de premier ordre sous la forme : f(R)=R+aR³ avec R la distance ou rayon entre chaque pixel et le centre optique situé *a priori* au centre de l'image et f(R) la nouvelle position de ce même pixel après correction de la distorsion. Le signe du facteur correcteur a, qui vaut 0 pour un objectif parfait, détermine si la déformation est en coussinet ou en barillet.

Par comparaison, on peut donc estimer la différence de distorsion entre les deux caméras en « déformant » l'une pour qu'elle corresponde le mieux possible à l'autre.

L'important est moins de corriger les déformations dans l'absolu des caméras, que de minimiser les disparités entre les caméras gauche et droite qui, elles, induisent un réel inconfort visuel en stéréoscopie.

On constate qu'il est illusoire de chercher à corriger un effet d'un ordre donné si l'on n'a pas préalablement corrigé les effets d'ordre supérieur. On constate également que la correction d'un effet d'un ordre donné influe sur l'estimation des effets d'ordre supérieur. Pour améliorer l'estimation de ces paramètres, on adopte alors l'algorithme suivant. On fait une estimation des paramètres d'ordre 1, étape 2.1, puis l'on passe à l'estimation des paramètres d'ordre 2, étape 2.2, sur des images corrigées en utilisant les paramètres d'ordre 1 estimés. On obtient alors une première estimation des paramètres d'ordre 2. On affine alors l'estimation des paramètres d'ordre 1 en appliquant une correction aux images avec les paramètres d'ordre 2. On affine ensuite l'estimation des paramètres d'ordre 2 avec les nouvelles valeurs obtenues pour les paramètres d'ordre 1. Avantageusement, on poursuit cette boucle jusqu'à obtenir une convergence de l'estimation des paramètres. Ces paramètres sont ensuite utilisés pour l'estimation des paramètres d'ordre 3 et ainsi de suite. Selon ce mode de réalisation, l'estimation des paramètres d'un ordre donné est utilisée pour effectuer une nouvelle estimation des paramètres d'ordre supérieur.

On comprend que les défauts effectifs que l'on choisit de corriger ainsi que l'ordre dans lequel ces défauts sont corrigés peuvent varier en fonction des systèmes. Les défauts cités et l'ordre cité ne représentent qu'un exemple de réalisation de l'invention.

De cette manière, on obtient un jeu de paramètres qui permet de corriger les images obtenues en s'approchant des images qui seraient obtenues si le dispositif de prise de vue était idéal. Ces paramètres de correction peuvent être ensuite directement utilisés lors de la prise de vue pour une correction immédiate ou joints aux images pour une correction ultérieure. Ils sont utilisables tant pour une prise de vue unique de type photographique ou lors d'une série de prise de vue dans une application de type vidéo.

Nous avons vu que l'efficacité de ce procédé de calibrage dépend en partie de la scène choisie pour la prise de vue utilisée pour l'estimation de ces paramètres. Cette scène doit être suffisamment éloignée, comporter un niveau de détails permettant des corrélations fiables et ne pas contenir d'objets proches dont la parallaxe viendrait perturber les opérations de corrélation. Ce procédé de calibrage pouvant être effectué à la demande tout au long de la vie de l'appareil, il peut être mis en oeuvre par un utilisateur peu au fait de ces contraintes. Pour aider cet utilisateur à choisir une scène pertinente pour effectuer le procédé de calibrage, on ajoute à ce procédé une étape de mesure d'un indice de la pertinence de la scène. Avantageusement, le résultat de cette étape de mesure est affiché à l'écran de l'appareil sous la forme d'un indice de pertinence. Cet indice peut être affiché comme une note de pertinence ou sous une forme graphique. Par exemple, une barre de pertinence dont la longueur est proportionnelle à l'indice de pertinence peut être affichée sur l'écran de l'appareil. Avantageusement, la couleur de cette barre peut servir à déterminer des zones pour cet indice de pertinence, par exemple une barre verte si l'indice est suffisant pour un calibrage de qualité, orange si l'indice est utilisable bien qu'insuffisant pour assurer le meilleur calibrage et rouge s'il est inutilisable.

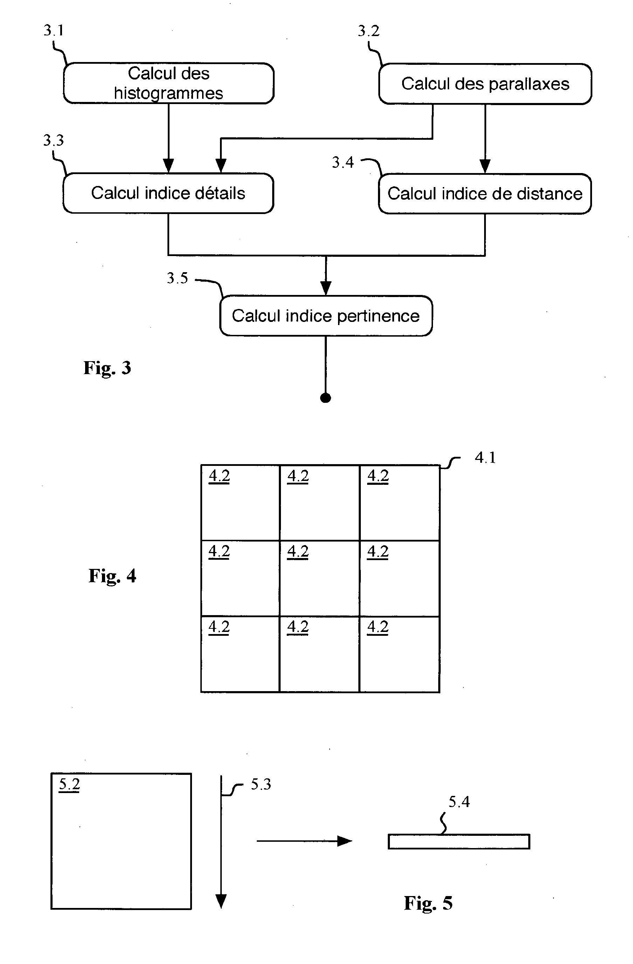

L'organigramme Fig. 3 illustre le procédé de calcul de l'indice de pertinence selon l'exemple de réalisation de l'invention. Une première étape 3.1 consiste en un calcul des histogrammes des images droite et gauche. L'étalement de cet histogramme donne un premier indice en relation avec le niveau de détail de la scène. En effet, une scène trop uniforme donne un histogramme resserré tandis qu'un histogramme bien étalé est le signe que la scène possède une variabilité des couleurs et des luminances permettant, *a priori*, une bonne corrélation.

Une seconde étape consiste à mesurer une grille de parallaxes sur la scène à partir des images capturées. Pour ce faire, l'image est divisée en une pluralité de zones. Cette division peut être quelconque. Selon l'exemple de réalisation de l'invention, la division est faite selon une grille telle que celle illustrée à la Fig. 4. L'image 4.1 est ici divisée en neuf zones 4.2 de même taille.

De façon à minimiser les temps de calcul nécessaires, un indice de parallaxe est calculé pour chaque zone selon la méthode illustrée par la Fig. 5. Selon ce mode de réalisation, la zone 5.2 est ramenée à une ligne unique 5.4 par une opération telle que la somme des colonnes 5.3. La ligne ainsi obtenue est comparée par corrélation avec la ligne équivalente de l'autre image. La corrélation est faite, par exemple, en faisant la somme des valeurs absolues des différences. Cette somme donne un indice de corrélation. On prend comme indice de parallaxe la translation qui donne le minimum de ces indices de corrélation.

Avantageusement, on profite du calcul de ces indices de corrélation pour calculer également la valeur médiane des indices de corrélation puis la différence entre la valeur minimum retenue et cette valeur médiane. Cette différence est un autre indice du niveau de détail de l'image et de son adéquation avec la fiabilité de la corrélation. En effet, si l'on obtient un indice de corrélation minimum nettement différent de la valeur médiane des indices de corrélation obtenus pour les valeurs de translation voisines on peut dire que la corrélation est fiable et que le niveau de détail est donc pertinent. Au contraire, si la valeur minimale ne tranche pas nettement des autres valeurs de l'indice de corrélation, c'est que le niveau de détail ne permet pas une corrélation fiable.

On obtient donc en sortie de l'étape 3.2 deux valeurs, un indice de parallaxe qui est une valeur de translation correspondant à un indice de corrélation minimal et un indice de fiabilité de corrélation correspondant à la différence entre l'indice de corrélation minimal et la valeur médiane des indices de corrélation. L'indice de fiabilité de corrélation est utilisé conjointement à l'indice d'étalement des histogrammes pour calculer un indice de détail global de l'image lors d'une étape 3.3. Par exemple, on calcule une moyenne pondérée des indices de fiabilité de corrélation de chaque zone et de l'indice d'étalement de l'histogramme.

Les indices de parallaxe des différentes zones sont utilisés pour le calcul d'un indice de distance lors de l'étape 3.4. Ces indices de parallaxe sont une bonne approximation de la distance de la scène. Le calibrage n'ayant pas encore eu lieu, on ne peut pas en déduire une information fiable de la profondeur, toutefois on obtient tout de même une bonne idée. Avantageusement, on peut appliquer le processus de calibration de façon successive, ce qui permet à chaque étape de calibration de tirer parti d'images en entrée déjà « pré-calibrées », d'où un gain en précision. On tire aussi de l'information de la répartition des valeurs des indices de parallaxe. Si ces valeurs ont une grande variabilité, cela signifie qu'il existe des plans à différentes profondeurs dans l'image et donc des objets en premier plan. Cet aspect a un impact négatif sur le calibrage. Une scène pertinente pour le calibrage est une scène produisant des valeurs uniformément faibles des indices de parallaxe pour l'ensemble des zones. On calcule donc un indice de distance qui sera d'autant plus grand que les indices de parallaxe sont uniformément faibles.

L'indice de pertinence est finalement calculé en fonction de l'indice de détails obtenu par l'étape 3.3 et de l'indice de distance obtenu à l'étape 3.4. Avantageusement, cet indice est une moyenne pondérée entre les deux indices.

On voit que grâce au procédé décrit, il est possible à un utilisateur d'effectuer un calibrage d'un dispositif de prise de vue stéréoscopique à tout moment, ce calibrage permettant une exploitation de la stéréoscopie en corrigeant des défauts du système. Avantageusement, l'utilisateur est guidé lors du choix de la scène pour le calibrage. Ce procédé peut être utilisé dans tout type d'appareils, notamment grand public, tels qu'appareils photo, caméras vidéo, téléphones ou consoles de jeux.

## Revendications

1. Procédé de calibrage d'un dispositif de prise de vue stéréoscopique disposant de deux caméras pour la capture d'une image droite et d'une image gauche, ledit dispositif présentant une pluralité de défauts, chacun de ces défauts pouvant être corrigé par application d'une transformation à au moins une des deux images capturées, lesdits défauts étant hiérarchisés en au moins deux ordres :
- une étape d'estimation des paramètres de correction des défauts d'un premier ordre donné ;
- une étape d'estimation des paramètres de correction des défauts d'un second ordre supérieur au premier ordre;
- une nouvelle étape d'estimation des paramètres de correction des défauts du premier ordre, l'estimation des paramètres du second ordre étant utilisée pour une nouvelle estimation des paramètres de correction des défauts du premier ordre ;
**caractérisé en ce que** quatre ordres sont utilisés pour hiérarchiser quatre défauts consistant en :
- un décalage en translation global de l'image ;
- une déformation en trapèze horizontal et vertical ;
- une rotation ;
- un facteur de zoom.

2. Procédé de calibrage selon la revendication 1, **caractérisé en ce que** le procédé corrige en outre une distorsion en barillet ou en coussinet.

3. Procédé de calibrage selon la revendication 1, **caractérisé en ce que** :
- le défaut de premier ordre consiste en un décalage en translation global de l'image ;
- le défaut de second ordre consiste en une déformation en trapèze horizontal et vertical ;
- le défaut de troisième ordre consiste en une rotation ;
- le défaut de quatrième ordre consiste en un facteur de zoom.

4. Procédé de calibrage selon la revendication 1, **caractérisé en ce qu'**il comporte en outre une étape de calcul d'un indice de la pertinence de la scène.

5. Procédé de calibrage selon la revendication 43, **caractérisé en ce que** le calcul d'un indice de pertinence de la scène comprend :
- une étape de calcul des histogrammes des images droite et gauche ;
- une étape de calcul des parallaxes sur une pluralité de zones des images gauche et droite ;
- une étape de calcul d'un indice de détails de la scène en fonction de l'étalement des histogrammes et des indices de corrélation entre les zones des images droite et gauche ;
- une étape de calcul d'un indice de distance qui sera d'autant plus grand que les indices de parallaxes sont uniformément faibles ;
- une étape de formation de l'indice de pertinence en fonction de l'indice de détail et de l'indice de distance.

## Patentansprüche

1. Kalibrierungsverfahren für eine stereoskopische Bildaufnahmevorrichtung mit zwei Kameras zum Aufnehmen eines rechten Bildes und eines linken Bildes, wobei die Vorrichtung eine Vielzahl von Fehlern aufweist, wobei jeder dieser Fehler durch Anwendung einer Transformation auf mindestens eines der beiden aufgenommenen Bilder korrigiert werden kann, wobei die Fehler in mindestens zwei Ordnungen priorisiert werden:
- ein Schritt eines Schätzens von Korrekturparametern von Fehlern einer gegebenen ersten Ordnung;
- ein Schritt eines Schätzens von Korrekturparametern von Fehlern einer zweiten Ordnung, die höher als die erste Ordnung ist;
- ein erneuter Schritt eines Schätzens von Korrekturparametern der Fehler der ersten Ordnung, wobei das Schätzen der Parameter der zweiten Ordnung für eine erneute Schätzung der Korrekturparameter der Fehler der ersten Ordnung verwendet wird;
**dadurch gekennzeichnet, dass** zur Priorisierung vier Ordnungen verwendet werden, die bestehen aus:
- einer globalen Translationsverschiebung des Bildes;
- einer horizontalen und vertikalen Trapezverformung;
- einer Drehung;
- einem Zoomfaktor.

2. Kalibrierungsverfahren nach Anspruch 1, **dadurch gekennzeichnet, dass** das Verfahren außerdem eine Tonnen- oder Kissenverzeichnung korrigiert.

3. Kalibrierungsverfahren nach Anspruch 1, **dadurch gekennzeichnet, dass**:
- der Fehler der ersten Ordnung aus einer globalen Translationsverschiebung des Bildes besteht;
- der Fehler der zweiten Ordnung aus einer horizontalen und vertikalen Trapezverformung besteht;
- der Fehler der dritten Ordnung aus einer Drehung besteht;
- der Fehler der vierten Ordnung aus einem Zoomfaktor besteht.

4. Kalibrierungsverfahren nach Anspruch 1, **dadurch gekennzeichnet, dass** es ferner einen Schritt eines Berechnens eines Indexes für die Relevanz der Szene umfasst.

5. Kalibrierungsverfahren nach Anspruch 4, **dadurch gekennzeichnet, dass** die Berechnung des Relevanzindexes der Szene umfasst:
- einen Schritt eines Berechnens von Histogrammen des rechten und linken Bildes;
- einen Schritt eines Berechnens von Parallaxen an einer Mehrzahl von Bereichen des linken und rechten Bildes;
- einen Schritt eines Berechnens eines Detailindexes der Szene als Funktion der Breite der Histogramme und von Korrelationsindizes zwischen den Bereichen des rechten und linken Bildes;
- einen Schritt eines Berechnens eines Abstandsindexes, der um so größer wird, je gleichmäßig niedriger die Parallaxeindizes sind;
- einen Schritt eines Bildens des Relevanzindexes als Funktion des Detailindexes und des Abstandsindexes.

## Claims

1. Method for calibrating a stereoscopic photography device having two cameras for capturing a right-hand image and a left-hand image, said device having a plurality of defects, each of these defects being able to be corrected by applying a transformation to at least one of the two captured images, said defects being hierarchized in at least two orders:
• a step of estimating the correction parameters for the defects of a first given order;
• a step of estimating the correction parameters for the defects of a second order higher than the first order;
• a new step of estimating the correction parameters for the first-order defects, the estimation of the second-order parameters being used for a new estimation of the correction parameters for the first-order defects;
**characterised in that** four orders are used for prioritizing four defects, consisting in:
• a global translation offset of the image;
• a horizontal and vertical trapezium deformation;
• a rotation;
• a zoom factor.

2. Calibration method according to claim 1, **characterised in that** the method further corrects a barrel or pincushion distortion.

3. Calibration method according to claim 1, **characterized in that**:
• the defect of first order consists in a global translation offset of the image;
• the defect of second order consists in a horizontal and vertical trapezium deformation;
• the defect of third order consists in a rotation;
• the defect of fourth order consists in a zoom factor.

4. Calibration method according to claim 1, **characterised in that** it further comprises a step of calculating an index of the relevance of the scene.

5. Calibration method according to claim 4, **characterised in that** the calculation of an index of relevance of the scene comprises:
• a step of calculating histograms of the right and left images;
• a step of calculating the parallaxes on a plurality of areas of the left and right images;
• a step of calculating an index of details of the scene according to the spread of the histograms and the indices of correlation between the areas of the right and left images;
• a step of calculating a distance index that will be greater, the more the parallax indices are uniformly low;
• a step of forming the relevance index according to the detail index and the distance index.
